# EUROPEAN PATENT SPECIFICATION

(11) **EP 4 392 704 B1**
(45) Date of publication and mention of the grant of the patent: **09.04.2025**
(21) Application number: 22765561.0
(22) Date of filing: 18.08.2022
(51) Int. Cl.: F17C 11/00, C01C 1/00

(54) **HYDROGEN STORAGE-COMPRESSION SYSTEM**
SPEICHERKOMPRESSIONSSYSTEM FÜR WASSERSTOFF
SYSTÈME DE STOCKAGE-COMPRESSION D'HYDROGÈNE

(30) Priority: 23.08.2021 EP 21192688
(43) Date of publication of application: 03.07.2024
(73) Proprietor: GRZ Technologies SA, 1580 Avenches (CH)
(72) Inventor: SCHMIED, Andjelko, 1774 Cousset (CH); RUBIN, Moritz, 3012 Bern (CH); SUN, Tai, 3177 Laupen (CH); BARDIS, Konstantinos, 1700 Fribourg (CH); HOLDENER, Fridolin, 8620 Wetzikon (CH); GALLANDAT, Noris, 1716 Schwarzsee (CH)
(74) Representative: reuteler & cie SA
(86) International application number: PCT/EP2022/073088
(87) International publication number: WO 2023/025657

(56) References cited:
- CN-B- 103 185 196
- JP-A- H03 252 301
- US-A1- 2012 201 719
- US-A1- 2019 093 825
- US-B2- 8 636 834
- GKANAS EVANGELOS I ET AL: "Efficient hydrogen storage in up-scale metal hydride tanks as possible metal hydride compression agents equipped with aluminium extended surfaces", INTERNATIONAL JOURNAL OF HYDROGEN ENERGY, ELSEVIER, AMSTERDAM, NL, vol. 41, no. 25, 4 May 2016 (2016-05-04), pages 10795 - 10810, XP029600561, ISSN: 0360-3199, DOI: 10.1016/J.IJHYDENE.2016.04.035

## Description

### Field of the Invention

This invention relates to an apparatus for storing and compressing hydrogen using metal hydrides.

### Background of the Invention

Hydrogen storage is a key step in the decarbonisation of fossil fuel technologies by renewable energy. A variety of storage methods including pressurized gas, hydrogen liquefaction and absorption in solid materials have been considered.

Metal hydrides are of high interest for the storage and compression of hydrogen as many metals and alloys are capable of reversibly absorbing significant amounts of hydrogen and compressing it through the addition of heat.

Molecular hydrogen is dissociated at the surface of the metal hydride before absorption. Two H atoms then recombine to form H2 upon desorption. The hydrogen absorption reaction in the material is typically exothermic (producing heat) whereas the hydrogen desorption reaction is conversely endothermic (absorbing heat).

A metal hydride storage-compression system may be used as a storage-compressor unit which desorbs and supplies hydrogen isobarically and pulsation-free at a required elevated pressure level by adding the heat needed for the desorption.

In order to adapt to storage-compression requirements in many applications, hydrogen storage-compression systems typically comprise a plurality of containers interconnected with assembled couplings, typically separated by valve mechanisms. In view of the exothermic reaction during hydrogen absorption and the endothermic reaction during the hydrogen desorption, whereby the temperature in the container affects the absorption and desorption rates and pressure, the optimal delivery and storage function requires accurately controlled processes and a certain complexity in the storage system that may reduce its reliability. Conventional metal hydrides hydrogen storage tanks are also often not ideal for the heat transfer requirements during the heat up phase, absorption or desorption. US 2019/093 825A1 discloses a hydrogen storage and release apparatus using heat exchange fluid transferring means.

### Summary of the Invention

It is an object of the present invention to provide a hydrogen storage-compression system that is efficient, compact, safe and easy to use and maintain.

It is advantageous to provide a hydrogen storage-compression system that is cost effective to produce and to operate.

Objects of this invention have been achieved by providing the hydrogen storage-compression system according to claim 1.

Disclosed herein is a hydrogen storage-compression system comprising a casing, a plurality of storage-compression containers forming at least one multi-container unit, and a metal hydride (MH) configured for hydrogen storage-compression contained within each of the storage-compression containers, the plurality of storage-compression containers of said at least one multi-container unit being interconnected by gas flow tubes in a direct fluidic connection ensuring that the gas pressure within the containers are substantially the same.

The plurality of storage-compression containers are mounted inside a chamber of the casing, the casing being configured to sustain a vacuum in said chamber to test the leakage of said storage-compression containers, the hydrogen storage-compression system further comprising a vacuum system comprising a vacuum pump connected to the casing.

The vacuum pump may be configured for generating a vacuum inside the casing chamber during operation of the hydrogen storage-compression system, for instance during at least a heating phase of the hydrogen storage-compression containers.

In an embodiment, the hydrogen storage-compression system further comprises a heating system configured for heating each of the storage-compression containers mounted inside the casing.

In an advantageous embodiment, the heating system comprises electric heating elements mounted on the hydrogen storage-compression containers.

In an advantageous embodiment, the heating system comprises an electric heating element mounted on or within the hydrogen storage-compression containers.

In an advantageous embodiment, the electric heating elements are mounted at one end of the hydrogen storage-compression containers, and a conductive jacket or layer extends along and over the storage-compression containers from the heating elements towards the other end of the storage-compression containers.

In an embodiment, the heating system comprises a heating fluid inlet to the casing configured for injection of a heated fluid into the chamber of the casing.

In an advantageous embodiment, the heating fluid is steam.

In other embodiments, other thermal mediums such as thermal oil or water may be used as the heating fluid.

In an advantageous embodiment, the hydrogen storage-compression system further comprises a cooling system configured for cooling each of the storage-compression containers mounted inside the casing.

In an advantageous embodiment, the cooling system comprises a cooling fluid inlet to the casing configured for injection of a cooling fluid into the chamber of the casing.

In an embodiment, the cooling fluid is air.

In an embodiment, the cooling fluid is water.

In an advantageous embodiment, the tubular container of each storage-compression container has an outer diameter D in a range from 1.2cm to 10cm. Adjacent ones of said plurality of storage-compression containers of said module are separated by a gap G within a range of distance corresponding to 0.02xD to 1xD, preferably in a range from 0.05xD to 0.5xD.

In an advantageous embodiment, the outer diameter D of the tubular container of each storage-compression container is in a range from 2cm to 8cm, preferably in a range from 3cm to 6cm, for instance in a range from 4cm to 5cm.

In an advantageous embodiment, the gap G between the storage-compression containers is in a range from 0.1xD to 0.4xD.

The storage-compression containers may have a length L in a range of 30cm to 600cm. In an advantageous embodiment, for manufacturing, installation and maintenance practicability, the storage-compression containers have a length in a range from 60cm to 200cm, preferably in range from 80cm to 150cm.

In an advantageous embodiment, the gas flow tubes comprise a T-shaped connection tube with a cap tube section extending substantially in an axial direction corresponding to an axis of the tubular container wall, and a transverse tube section extending substantially orthogonally to the axial direction and welded to a first end of the cap tube section, a second end of the end cap tube section being welded to an entry cap of the storage-compression container.

In an advantageous embodiment, ends of the transverse tube section are welded to ends of transverse tube sections of adjacent or opposing storage-compression containers.

In an advantageous embodiment, one end of row storage-compression container comprises an L-shaped or elbow-shaped connection tube extending from the entry cap to an end of a transverse tube section of the adjacent storage-compression container.

In an embodiment, the plurality of storage-compression containers of one multi-container unit are arranged in one row, the axes A of the containers being parallel to each other.

In another embodiment, the plurality of storage-compression containers of one multi-container unit are arranged in two co-planar rows in an opposing arrangement such that the gas flow tubes are positioned between the two rows, the axes A of the containers being parallel to each other.

In an advantageous embodiment, each multi-container unit comprises a filter positioned on an inner side of the entry cap covering an inlet/outlet to prevent metal hydride particles from escaping the chamber through the inlet/outlet.

In an advantageous embodiment, the filter comprises or consists of a sintered metal disc welded at its periphery to the entry cap.

In an advantageous embodiment, the tubular container wall, entry and end caps, and gas flow tubes are made of a metal resistant to hydrogen, pressure and temperature as well as easily weldable. Such metals can be stainless steels, modified carbon steels, aluminum alloys, or Cu-Ni alloys.

In an advantageous embodiment, a plurality of multi-container units are arranged as a stack of multi-container units forming a storage-compression module configured for containing hydrogen gas at a common pressure.

In an advantageous embodiment, the multi-container units of the module are interconnected fluidically together and connected to a valve for further connection to a hydrogen consumption and generation system.

In an advantageous embodiment, a plurality of said multi-container units are assembled in a stacked manner in a support structure for connection to a common hydrogen generation and consumption system or network.

In an embodiment, a hydrogen storage-compression system according to the invention may be used as a near-isobaric and pulsation-free hydrogen supply system which can absorb and desorb hydrogen at elevated pressure, preferably greater than 50 bar, more preferably greater than 200 bar, and desorb it at a substantially constant pressure and with a minimal change in temperature, preferably with a temperature change less than 40°C, more preferably with a temperature change ranging from 20°C to 30°C.

In an embodiment, a hydrogen storage-compression system according to the invention may be used to compress hydrogen gas leak streams from a labyrinth sealing system to a suction pressure of an apparatus such as for instance a mechanical gas compressor or a cryogenic pump.

In an application, the hydrogen storage-compression system may advantageously be used as a near-isobaric hydrogen supply system to absorb and desorb hydrogen at elevated pressure, preferably greater than 50 bar, more preferably greater than 200 bar, and desorb it at substantially constant pressure with a minimal change in temperature, preferably with a temperature change less than 40°C, more preferably with a temperature change ranging from 20°C to 30°C.

In an application, the hydrogen storage-compression system may advantageously be used to compress hydrogen gas leak streams from a labyrinth sealing system to a suction pressure of an apparatus such as for instance a mechanical gas compressor or a cryogenic pump.

In an application, the hydrogen storage-compression system may advantageously be used to feed hydrogen into a gas network in a vibration-less, pulsation-less manner.

Further objects and advantageous aspects of the invention will be apparent from the claims, and from the following detailed description and accompanying figures.

### Brief Description of the drawings

The invention will now be described with reference to the accompanying drawings, which by way of example illustrate embodiments of the present invention and in which:
Fig. 1 is a schematic cross-sectional view of a hydrogen storage-compression system according to an embodiment of the invention in which the heating and cooling occurs through the supply of a thermal medium;
Fig. 2 is a schematic cross-sectional view of a hydrogen storage-compression system according to another embodiment of the invention in which the required heating power is supplied through an electrical resistance heating;
Fig. 3 is a schematic cross-sectional view of a hydrogen storage-compression system according to another embodiment of the invention in which the required heating power is supplied through an electrical resistance heating with an additional system of heat spreader to ensure an homogeneous temperature distribution;
Fig. 4 is a schematic cross-sectional view of a multi-container storage unit of the module of Fig. 1 - Fig 3;
Fig. 5 is a schematic cross-sectional view of a single storage-compression container of the unit of Fig. 4;
Figs. 6a and 6b illustrate schematically the cross-sectional arrangements of containers in a casing of a hydrogen storage system according to embodiments of the invention;

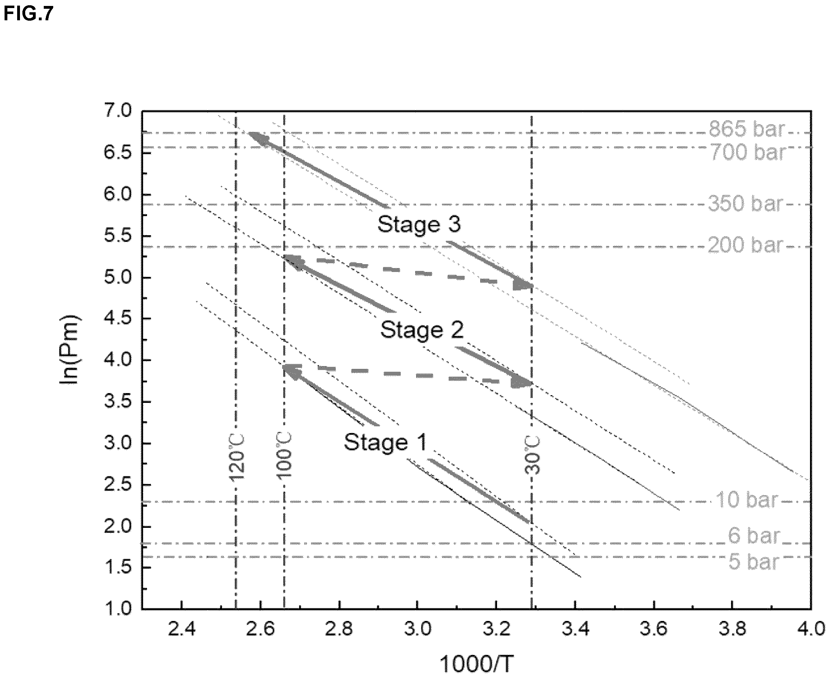

Fig. 7 is a plot of pressure (In *P*) versus inverse temperature (1000/*T*) of a combination of several compression stages with different metal hydrides materials to achieve a high compression ratio with a moderate temperature difference according to an embodiment of the invention.
Fig. 8 is a schematic view of a hydrogen storage-compression system according to an embodiment of the invention coupled to an apparatus such as for instance a mechanical gas compressor or a cryogenic pump, in which a hydrogen leakage flow from a labyrinth seal of the apparatus is compressed back to the suction pressure of the apparatus.

### Detailed description of embodiments of the invention

Referring to the figures, a hydrogen storage-compression system 1 according to embodiments of this invention comprises a pressure resistant casing 2 and one or a plurality of storage-compression modules 10 mounted inside a chamber 16 formed by the casing, the storage-compression modules for fluidic connection to one or more hydrogen sources (not shown) and one or more hydrogen consumers (not shown). A support structure (not shown) may be provided to support the storage-compression module(s) inside the casing. The storage-compression module 10 comprises a plurality of storage-compression containers 6, each container 6 containing a metal hydride MH configured for storing hydrogen, as will be described in more detail further on.

The hydrogen source may for instance be an electrolyzer using renewable energies for producing hydrogen from water, or other hydrogen bearing molecules. The hydrogen consumer may for instance be in the form of a fuel cell to produce electricity from hydrogen gas, or a pressurized hydrogen storage tank for mobile applications or other devices for further storing or consuming hydrogen.

An example of the use of a hydrogen storage-compression system according to embodiments of this invention is to store and compress hydrogen produced by a hydrogen generation system converting solar energy produced by photovoltaic panels into hydrogen gas. The hydrogen gas may then serve as a fuel that stores the captured energy, which may be converted into electrical, mechanical or thermal energy using different energy conversion systems including fuel cells, internal combustion engines or gas turbines among others. Further, other alternatives can be considered, comprising the production of different gases, for instance methane or ammonia, for easier handling and storage. Thus, the hydrogen storage system may act as a buffer and a compressor, both in a single device.

Another example of a typical application for a hydrogen storage-compression system according to an embodiment of the invention is:
- The storage and compression of hydrogen for the refuelling of hydrogen vehicles
- The same application as above, where electricity originates from another source (wind, hydroelectric, etc.)
- The storage and compression of hydrogen produced as a waste from a chemical process and later on used for electricity generation
- Any of the above applications where hydrogen is then used for another purpose, e.g., as precursor for a chemical reaction or a fuel for the production of thermal energy
- The compression and reinjection of hydrogen leak flows in apparatuses with labyrinth sealings.

According to an aspect of the invention, the hydrogen storage system 1 comprises a vacuum system 18 connected to the casing 2. The vacuum system comprises a vacuum pump 19 connected via a vacuum pump connection line 3a to the casing chamber 16, configured to create a vacuum within the casing chamber 16.

The vacuum within the casing chamber may serve one or more purposes.

In an embodiment, the creation of a vacuum may be used to test whether there is any leakage of gas from the storage-compression module(s) 10 containing hydrogen. Such leakage can be detected and quantified by detecting the leak gas directly in the outlet stream of the vacuum system 18.

In some embodiments, this vacuum test may be performed continuously or intermittently and in certain embodiments these tests may be performed prior to initial use of the hydrogen storage system and/or at certain intervals, for instance planned maintenance intervals or subsequent to a fault or repair, to test the integrity of the hydrogen storage system.

The casing 2 is configured to withstand a vacuum pressure in the chamber 16, typically of less than 0.1 mbar, in other words to withstand an external pressure on the casing of at least around 1 bar.

In certain embodiments, the vacuum system 19 may further serve the purpose of reducing the convective heat transfer from the hydrogen storage-compression containers 6 surface to the casing 2. Thus, the thermal energy produced from the heating element 21 is utilized for the heat-up of the hydrogen container content rather than its surroundings.

In such a system, the hydrogen storage-compression system 1 may comprise a heating system 20 including electric heating elements 21 coupled to each storage-compression container 6 for directly heating the storage-compression containers 6.

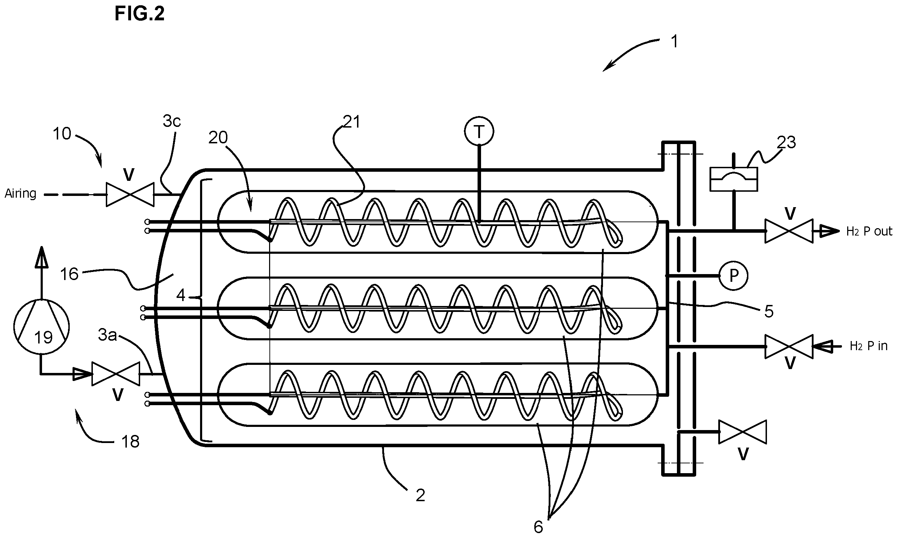

In an embodiment, for instance as illustrated in figure 2, the electrical heating element 21 may be mounted within the storage-compression containers 6.

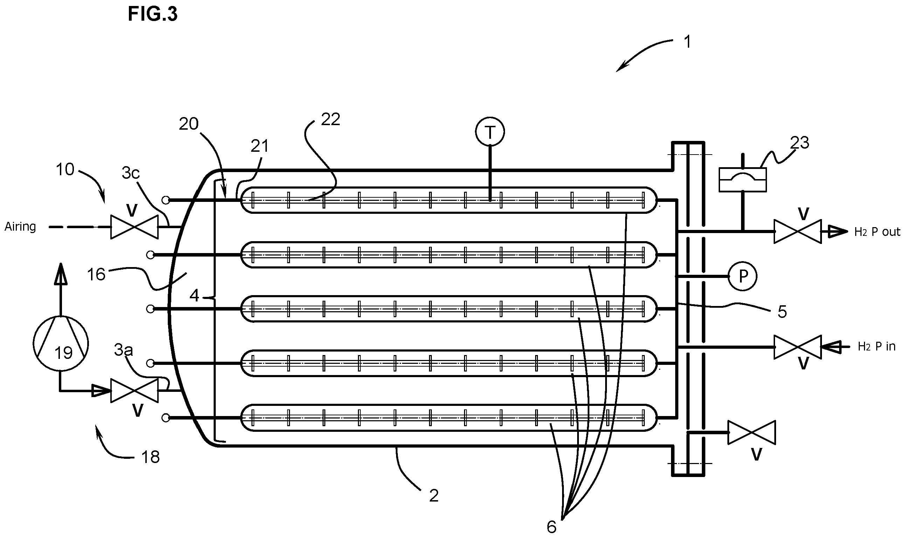

In an embodiment, for instance as illustrated in figure 3, the electrical heating element 21 may be mounted outside the storage-compression containers 6, and a thermally conductive element 22 may be provide on the container wall to spread the heat generated and to reduce the temperature gradients within the storage-compression container 6. The thermally conductive element 22 may comprise a highly thermally conductive material such as copper or aluminum.

Thus, when the electric heating is applied during the heating phase or during the endothermic process of hydrogen desorption, the vacuum prevents transfer of heat by convection to the casing. An embodiment with direct electric heating of the storage-compression containers 6 during hydrogen desorption is illustrated in figure 2. In this embodiment, cooling during the hydrogen absorption phase may be performed by a cooling system 24 using a cooling fluid, in particular air that is injected in the casing chamber 16 via a cooling fluid connection 3c. The cooling fluid may be circulated through the inside of the casing chamber by a ventilator or gas pump in order to create a circulation of fluid for forced convection.

In another embodiment of the invention illustrated in figure 3, the electric heating element 21 may be complemented with a thermally conductive element 22 in order to ensure an homogeneous temperature distribution.

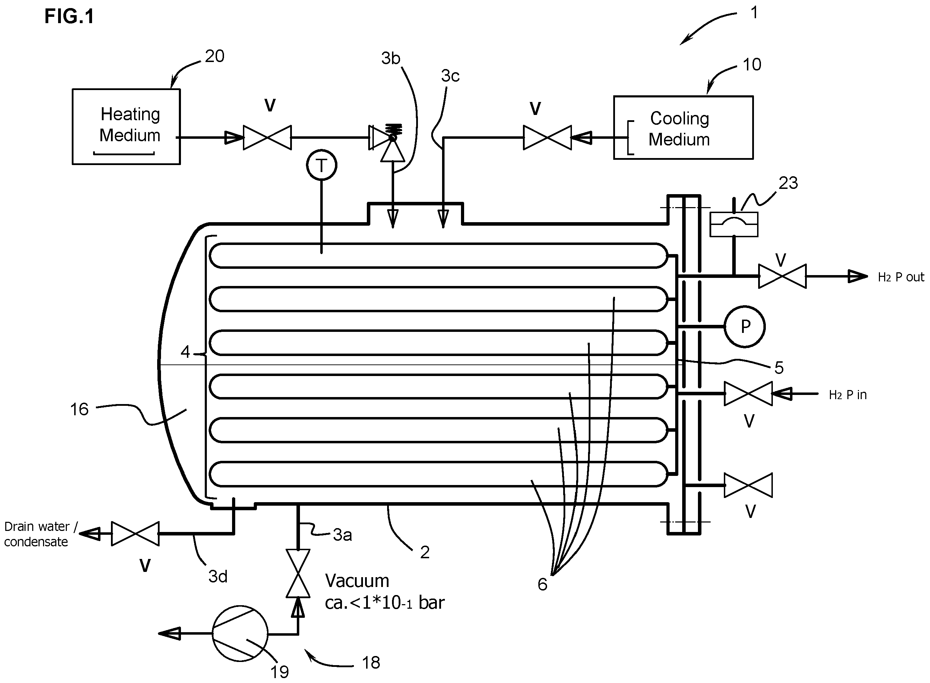

In another embodiment illustrated in figure 1, the heating system 20 comprises a heating fluid inlet connection 3b to allow a heated fluid such as steam to be injected into the chamber 16 of the casing during endothermic phases. The steam may be evacuated via a drain connection 3d controlled by a valve V. In the illustrated embodiment, the cooling system 24 may be provided by a cooling fluid such as water injected through a cooling fluid connection 3c into the chamber 16 of the casing and evacuated via a drain connection 3d. It may however be noted that the connection for the heating fluid may also be used for the cooling fluid, in other words a single inlet may be provided that is switched for instance by a valve system between the heating fluid source and the cooling fluid source. There may also be a single outlet for the vacuum pump and drain, also connected by a valve system to the vacuum pump and drain circuit respectively via a valve system.

The storage-compression module(s) 10 may be connected to an overpressure release system 23, for instance comprising a pressure relief valve or a burst disc or other component that is configured to release pressure within the storage-compression containers 6 at a predefined safety threshold.

A plurality of storage-compression containers 6 interconnected by gas flow tubes 5 may form a multi-container unit 4, whereby each storage-compression module 10 may comprise one or more multi-container units 4. The plurality of storage-compression containers 6 of each multi-container unit 4 are fluidically interconnected in direct fluidic connection without any valves or pressure separation means between the containers such that they are essentially at the same gas pressure and thus operate in parallel to absorb and desorb hydrogen. Each storage-compression container 6 has a chamber 13 therein containing a metal hydride MH configured for storing hydrogen as per se well known in the art. Various metal hydrides, for instance as described in PCT/EP2020/059860 may be filled in the containers.

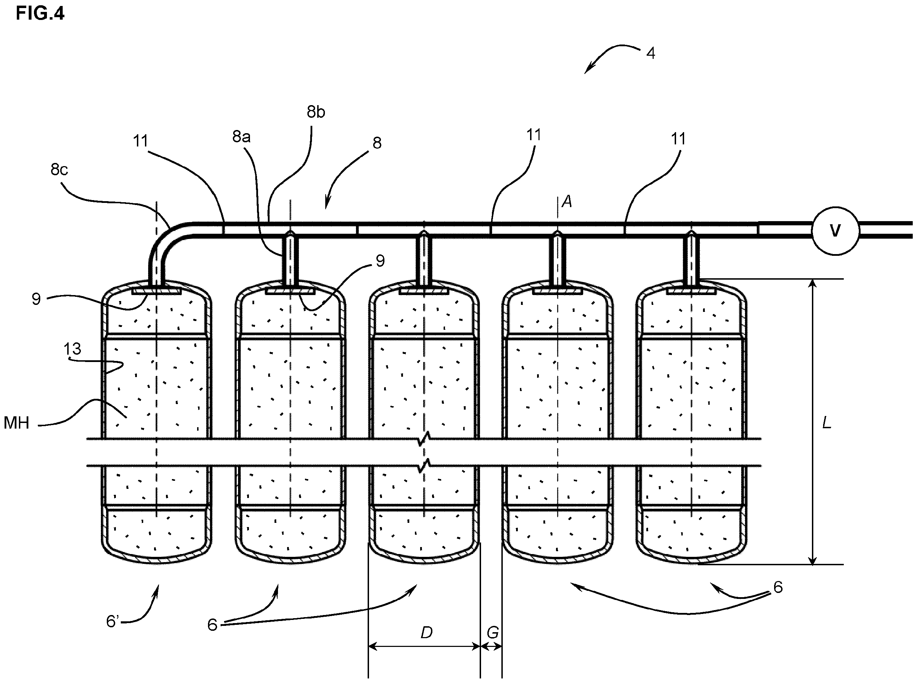

The separation of a volume of hydrogen gas in a plurality of containers as opposed to using a single container allows to have small containers with a high surface to volume ratio that can be separated by a spacing ***G*** allowing for a better heat transfer during the exothermic and endothermic reactions. Moreover, the storage volumes of each multi-container unit 4 can be easily expanded by adding more storage-compression containers 6 without fundamentally changing the heat transfer properties and behaviour of the multi-container unit 4. The plurality of storage-compression containers 6 of one multi-container unit 4 may be arranged essentially parallel to each other, aligned preferably in a planar row as illustrated in figure 4.

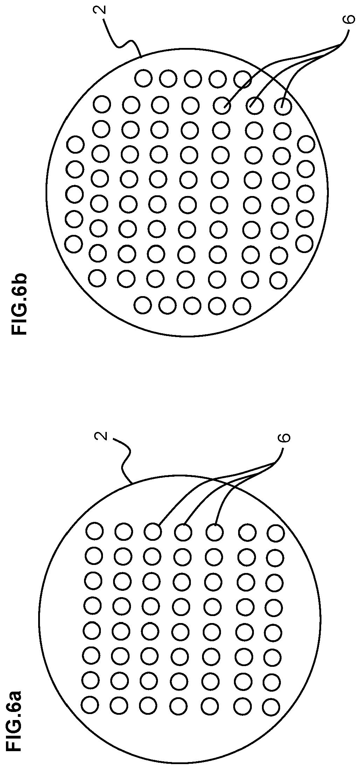

A plurality of multi-container units 4 forming a storage-compression module 10 may be stacked one upon the other and/or placed one next to the other. The multi-container units 4 forming one or more storage-compression modules 10 may advantageously be arranged in a substantially square disposition (seen in cross-section) as illustrated in figure 6a such that they fit well within a substantially cylindrical casing 2. Within the scope of the invention, the multi-container units of the storage-compression modules may also be arranged in various other geometrical manners to fill the casing chamber 16 with smaller volume footprint than by a square arrangement, as schematically shown in figure 6b. More generally, although the multi-container units 4 of storage-compression containers 6 arranged in rows as illustrated are advantageous, within the scope of the invention, the hydrogen storage-compression containers may be arranged and interconnected in various other geometrical manners.

Each storage-compression container 6 comprises a tubular container wall 6a closed on one end by an end cap 6b and on the other end by an entry cap 6c that comprises an inlet/outlet 7.

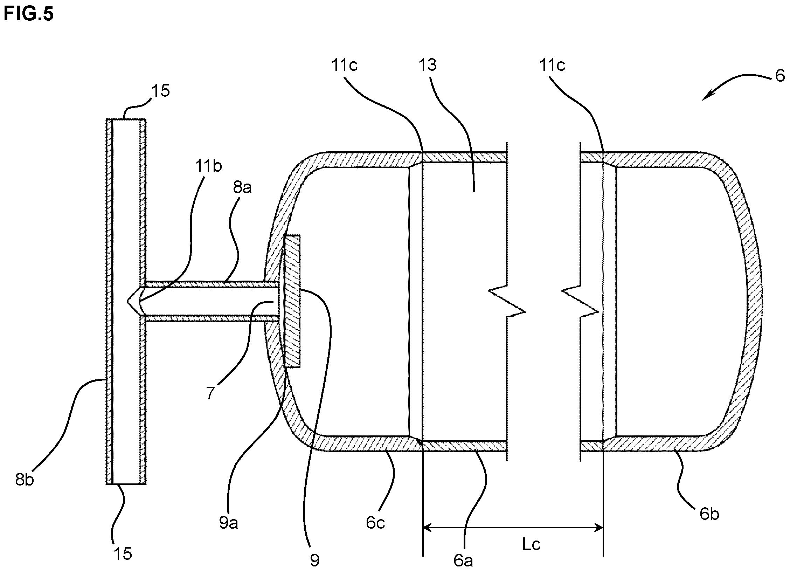

In embodiments illustrated in figure 5, the inlet/outlet 7 comprises an orifice substantially centrally positioned on the entry cap that is welded to a T-shaped connection tube 8 of the gas flow tubes 5. A storage-compressor container 6 at one end of the row of containers of the multi-container unit 4 comprises an elbow shaped or L-shaped connection tube 8c, however the remaining storage-compression containers 6 are each substantially identical and comprise substantially identical T-shaped connection tubes 8.

Each T-shaped connection tube 8 comprises a cap tube section 8a that extends substantially axially from the entry cap 6c in the direction of the axis ***A*** of the tubular container wall 6a, and a transverse tube section 8b welded to an end of the cap tube section 8a.

The gap ***G*** between adjacent storage-compression containers serves to allow a good heat transfer during the endothermic or exothermic reactions by forced convection of a fluid through the stack of multi-container units 4.

The length of the storage-compression container, in particular the tubular container wall 6a, may also be easily configured as required in order to increase or decrease the volume of each multi-container unit 4, here also without substantially modifying the heat transfer properties. The thermal behaviour of the multi-container unit may thus be substantially independent of the storage volume of the system.

An optimal heat transfer process for storage and compression of hydrogen with metal hydrides, taking into account weight and manufacturing practicability and economy, may be obtained with storage-compression containers 6 each having a diameter ***D*** in a range of 1.2 cm to 10 cm, preferably in a range from 2 cm to 6 cm, for instance around 4.5 cm.

A practical length ***L*** of each storage-compression container may be in a range of 50 cm to 600 cm but preferably is in a range from 80 cm to 200 cm, for instance in a range of 60cm to 150cm for manufacturing, installation and maintenance practicability.

The container wall material is preferably made of stainless steel or another hydrogen resistant steel such as modified carbon steels, aluminum alloys, or Cu-Ni alloys, the end caps 6b, 6c being welded to opposite extremities of the tubular container wall 6a, for instance by mean of an orbital welding process (TiG welding). During the manufacturing process, the end cap 6b is first welded to one extremity of the tubular container wall 6a, and the metal hydride particles are then filled through the other extremity to about 70% to 100% per cent of the internal volume of the container 6, and the entry cap 6c may then be welded to the other extremity of the tubular container wall 6a.

The container wall, end caps, and gas flow tubes are preferably made of stainless steel, but may also be made of other weldable metals such as modified carbon steels, aluminum alloys, or Cu-Ni alloys.. Within the scope of the invention, composite materials may also be used for the container walls, end caps and gas flow tubes.

The entry cap 6c, prior to welding to the tubular container wall 6a, is welded to the T-shaped connection tube 8. The entry cap may further comprises a filter 9 that is mounted inside the entry cap covering the inlet/outlet 7 and configured to prevent the metal hydride particles from passing into the gas flow tubes 5 while allowing hydrogen to pass therethrough.

In an advantageous embodiment, the filter 9 is made of a sintered stainless steel disc that may be welded at its outer periphery 9a to an inner side of the entry cap 6c. In view of the similar materials, welding is easily performed. Moreover the weld connection is robust and not subject to high thermal dilation forces in view of the similar coefficient of thermal expansion because similar or identical materials are used for the entry cap 6c and filter 9.

Each storage-compression container 6 with their entry cap welded to the T-shaped connection tube thus forms an integral component during the manufacturing process, said integral components being connected together by welding the ends 15 of the transverse tube sections 8b of adjacent storage-compression containers together to form a weld connection 11. The gas flow tubes 5 may also be made of stainless steel or another hydrogen resistant steel of same or similar compositions and grade as the stainless steel or another hydrogen resistant steel used for the entry and end caps 6c, 6b and tubular container wall 6a. Since the gas flow tubes are welded together at ends 15 of the transverse tube sections 8b, additional storage-compression containers 6 may be easily added, depending on the desired overall storage volume, during the manufacturing process in a cost effective yet particularly reliable and safe configuration.

The entry and end caps 6b, 6c may be substantially formed by a stamp forming process, with a machining of the circular edge that forms the welding interface with the tubular container wall 6b. This also allows to ensure a particularly robust structure able to withstand a high pressure yet that is economical to manufacture and flexible with regard to the volume that may be required for the desired application.

The multi-container units 4, once the storage-compression containers 6 have been welded together, thus have a single inlet and outlet for the plurality of the storage-compression containers and that may be connected via one or more valves V to other multi-container units 4 in a stack with a gap therebetween similar in dimensions to the gap G between containers of a unit, in order to allow natural or forced convection around each of the containers of the system 2 for heat transfer during the endothermic or exothermic reactions.

It is possible to interconnect storage-compression containers 6 of the multi-container unit 4 in a plurality of layers, for instance two, three or four layers, to form a single fluidically interconnected storage unit having a single common inlet and outlet to a valve. A plurality of these units may then be stacked or placed next to each other or both stacked and placed to each other to form modules of a hydrogen storage system where each of the units may be independently filled and emptied in any desired sequence, for instance as described in PCT/EP2020/059860. It is also possible in different units or modules to have different metal hydrides for low pressure and high pressure operations as described in the aforesaid patent application.

### Process description - Quality Control

The casing 2 allows the performance of a leak test under vacuum without the need of a separate testing facility. The leak test may be performed before first use of the hydrogen storage-compression system 1, or during use of the hydrogen storage-compression system. Before first use, helium may be filled inside the hydrogen storage-compression containers 6 up to at least a maximum operating pressure for which the hydrogen storage-compression container is designed (i.e the "design pressure"). In some cases, an even higher pressure is required to comply with the local codes and regulations (e.g., 10%, 25%, 50% or even 100% above the design pressure). The reason for using helium and not hydrogen is to avoid activation of the metal hydrides material before completing the quality testing. This is the first step of the integral pressure and leak test and confirms the structural integrity of the system at the design pressure.

As a next step, the vacuum pump 19 is operated to evacuate the air in the casing chamber 16. The pressure is typically decreased to less than 0.1 mbar (absolute pressure). A helium detector is positioned in the outlet stream of the casing chamber to measure the helium concentration. The helium detector may be based on a mass spectrometer. The leak rate from the hydrogen storage-compression containers 6 to the casing chamber 16 may be directly measured based on the helium concentration. The leakage flow rate and has to be below a specific quality threshold, which is typically set to 2.0E-6 mbar*l/s.

A further advantage of this feature, in embodiments with direct electrical heating, for instance as illustrated in figure 1, pertains to the possibility to continuously monitor the leakage rate during compression operations, as the casing chamber 16 is constantly maintained under vacuum. In such a case, the vacuum system 18 allows a continuous monitoring of possible leakages and eliminates the need of manual inspections. The leak detector is able to monitor not only helium, but also hydrogen - which is typically the case for mass spectrometers. Therefore, it increases the reliability and safety compared to alternative hydrogen storage options in which the storage-compression container is directly exposed to the ambient environment.

### Operation Process description - embodiment with direct electrical heating

In an advantageous configuration, by way of example, a single storage-compression module 10 comprising several multi-container units 4 connected in parallel in order to increase the flow rate or to ensure a continuous stream of compressed hydrogen may be employed. The complete compression cycle takes place in a single or multi-stage compression from the initial supply pressure (typically 10 - 50 bar) to the delivery pressure (typically 50 - 950 bar). The following paragraphs describe the full compression cycle which include the following phases: (i) heat-up (ii) desorption (iii) cool-down and (iv) absorption. The exemplary values indicated below are valid for a typical compression cycle from 35 bar (inlet) to 350 bar (outlet) in a single stage and batch configuration (discontinuous hydrogen compression).

### Heat up and desorption phases

At the start of the heat up phase, the hydrogen is in the hydrogen absorbing Metal Hydride material of the hydrogen storage-compression containers 6 at a temperature of, for instance, around 30°C and at a pressure, for instance, of around 35 bar. The electrical heating system 20, 21 is activated in order to provide the necessary thermal power for the elevation of the system temperature and, consequently, the system pressure.

In the illustrated embodiment of figure 3, heat is conducted to the metal hydrides through a thermal spreader made a highly thermally conductive material (e.g. copper), allowing for a fast heat transfer and minimisation of the temperature difference along the axial and radial directions. Heat conduction in the radial direction proceeds significantly faster towards the center of each hydrogen storage-compression container 6 than in the environment therearound. This may be accomplished through the minimization of the heat losses to the environment by the employment of a vacuum inside the chamber 16 of the casing 2 in which the hydrogen storage-compression containers 6 are enclosed.

The hydrogen storage-compression containers 6 are heated up, for instance from p₁= 35 bar and T₁ = 30°C to p₂ = 350 bar and T₂ = ca. 150°C, respectively. The process may continue with the desoprtion of hydrogen at a substantially constant pressure (for instance p₂ = *circa* (ca.) 350 bar) and approximately constant temperature (for instance T₂ = ca. 150°C). Since the desorption reaction is endothermic, the system requires the supply of heat until the metal hydrides have released most of the hydrogen.

### Cool-down and absorption phases

At the end of the desorption cycle, the hydrogen storage-compression containers 6 are cooled, for instance from T₂ = ca. 150°C to T₁ = ca. 30°C. During this cooling phase, the hydrogen pressure drops from for instance P₂ = 350 bar to P₁ < 35 bar. The vacuum chamber is filled with a cooling fluid, for instance air, by opening a valve V on the cooling fluid connection line 3c. Cooling of the hydrogen storage-compression containers is accomplished with the flow of the cooling fluid whereby the fluid flow rate and consequently the cooling capacity may be regulated by a fan or a gas compressor. Efficient heat dissipation on the surface of the hydrogen storage-compression containers 6 is further enhanced through the highly thermally conductive layer 22.

At the end of the cooling phase, the hydrogen supply is opened to allow flow of hydrogen at a low operational pressure of, for instance, p₁ = 35 bar. Since the absorption is exothermic, the heat needs to be rejected such that the temperature and pressure are maintained substantially constant. This may be achieved with the cooling fluid (e.g. air) flow through the cooling fluid connection line 3c.

### Operation Process description - embodiment comprising heating with a heating fluid (e.g. steam) and cooling with a cooling fluid (e.g. water)

In an advantageous configuration, by way of example, a single storage-compression module 10 comprising several multi-container units 4 connected in parallel in order to increase the flow rate or to ensure a continuous stream of compressed hydrogen may be employed. The complete compression cycle takes place in a single or multi-stage from the initial supply pressure (for instance typically 10 - 50 bar) to the delivery pressure (for instance typically 50 - 950 bar). The following paragraphs describe the full compression cycle which include the following phases: (i) Charging (ii) Heat uo (iii) Desorption and (iv) Cool down. The values below are valid for a typical compression cycle from for instance around 35 bar (inlet) to around 350 bar (outlet) in a single stage and batch configuration (discontinuous hydrogen compression). This embodiment can be expanded to multi-stage and/or continuous operation, which enables to reduce the required temperature and to provide continuous hydrogen.

### Charging of the hydrogen storage-compression module

Hydrogen is delivered from the supply line at a pressure of for instance about 35 bar and temperature of for instance about 30°C. In order to maintain a constant pressure and temperature, the hydrogen storage-compression containers 6 have to be continiously cooled during this phase, as the absorption reaction is exothermic. The cooling of the hydrogen storage-compression containers 6 is achieved through direct contact of the container walls with a cooling fluid, e.g. water, providing an efficient heat transfer. The temperature of the hydrogen storage-compression module can be controlled with the cooling fluid (e.g. water) flow which is preferably regulated with a variable-speed pump or a control valve. After the charging process is completed, the cooling fluid (e.g. water) is drained out of the casing chamber 16 through a drain connection 3d for instance disposed at the bottom of the casing 2.

### Heat-up

The process continues with the heat-up of the hydrogen storage-compression module 10 from a temperature of for instance about 30°C to 150°C with a corresponding increase of the pressure from for instance about 35 bar to 350 bar. The heating is accomplished with the flow of a heating fluid, for instance advantageously pressurised steam, injected in the chamber 16 of the casing 2 and flowing over the hydrogen storage-compression containers 6; this exploits the condensation enthalpy of water and allows to maintain a high temperature difference between the steam and the wall of the hydrogen storage-compression containers during the heating process. Efficient control of the heating capacity can be achieved through the regulation of the steam pressure.

### Desorption:

The module is then heated such that the hydrogen is discharged at the required pressure of for instance about 350 bar. Similarly as for the previously described phase, pressurized steam may advantageously be utilised for this process.

### Cool-down:

The process continues with the cool-down of the hydrogen storage-compression containers 6. This results in a drop of the temperature from for instance about 150°C to the starting temperature of for instance about 30°C.

### Example of use of the hydrogen storage-compression system in a specific application (I)

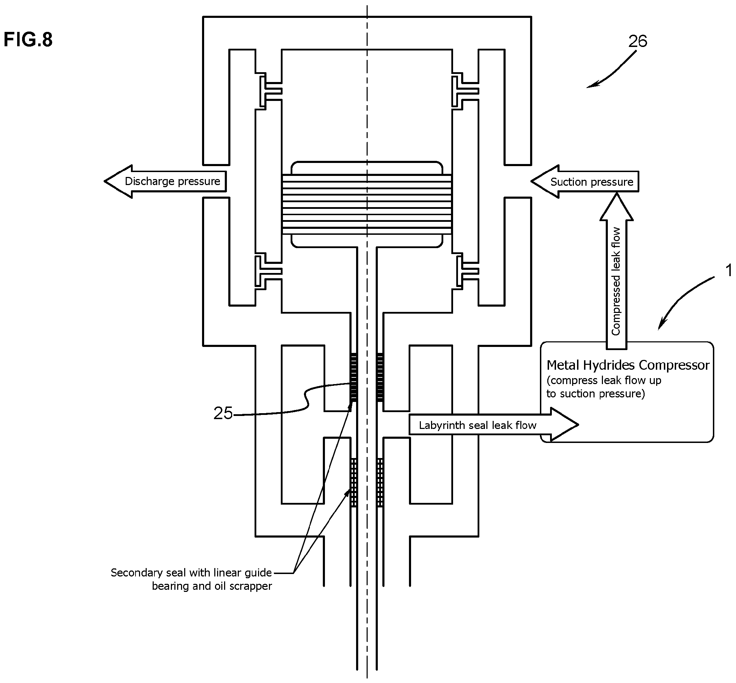

In many industrial applications, hydrogen gas is constrained within a certain volume by using a so-called labyrinth sealing. In such case, there is always a hydrogen leak from the confined volume. The metal hydrides hydrogen compressor can be used to compress this leak flow and feed it back to the system at the increased suction pressure. A typical application for this system is for instance in labyrinth sealed reciprocating piston compressors 26 or potentially also in labyrinth sealed turbo-compressors. Such a typical application is shown schematically in figure 8. The hydrogen flow from the labyrinth seal 25 is absorbed in the metal hydrides hydrogen storage-compression system 1, and then compressed to the suction pressure in order to be reinjected isobarically and pulsation-free into the suction stream of the piston compressor 26. The metal hydrides hydrogen storage-compressor system 1 could be potentially used on any hydrogen compressor using labyrinth-sealing systems.

### Example of use of the hydrogen storage-compression system in a specific application (II)

A further application of the described hydrogen storage-compression system may be the injection of hydrogen in the existing natural gas infrastructure or in pressurized hydrogen storage systems. Currently, conventional reciprocating piston or diaphragm compressors are used.

However, these devices induce vibrations and pulses which are detrimental to the gas pipelines. The described metal hydrides hydrogen storage-compressor system could be used to compress hydrogen and feed hydrogen isobarically, pulsation-free and vibrationless into the existing natural gas grid.

### List of references used:

**Hydrogen storage-compression system 1**
**Casing 2**
   Casing chamber 16
   Inlets/outlets 3
      Vacuum pump connection 3a
      Heating fluid connection 3b
         Heating medium
      Cooling fluid connection 3c
         Cooling medium
      Drain connection 3d
**Vacuum system 18**
   Vacuum pump 19
**Heating system 20**
   Electric heating element 21
   Thermally conductive element 22
   Heating fluid inlet
**Cooling system 24**
   Cooling fluid
**Storage-compression module 10**
   **Multi-container unit 4**
      **Storage-compression container 6**
         Tubular container wall 6a
         End cap 6b
         Entry cap 6c
            Inlet/outlet 7
            Filter 9
               Periphery 9a
         Storage-compression container chamber 13
         Metal Hydride MH
      **Gas flow tubes 5**
         T-shaped connection tube 8
            Cap tube section 8a
            Transverse tube section 8b
               Ends 15
         Weld connection 11
      **Overpressure release system 23**
   **Valves V**
   **Support structure 12**
   **Control system**
      Pressure sensors **P**
      Temperature sensors **T**
      **Valves V**
      Automatic valve control
Labyrinth sealed reciprocating piston compressor 26
   Labyrinth seal 25
Storage-compression container diameter *D*
Gap distance between adjacent containers *G*
Length of a container *L*

## Claims

1. Hydrogen storage-compression system (1) comprising a casing (2), a plurality of storage-compression containers (6) forming at least one multi-container unit (4), and a metal hydride (MH) configured for hydrogen storage-compression contained within each of the storage-compression containers, the plurality of storage-compression containers of said at least one multi-container unit being interconnected by gas flow tubes in a direct fluidic connection ensuring that the gas pressure within the containers are substantially the same, wherein said plurality of storage-compression containers are mounted inside a chamber (16) of the casing, the casing configured to sustain a vacuum in said chamber to test leakage of said at least one multi-container unit, the system further comprising a vacuum system (18) comprising a vacuum pump (19) connected to the casing.

2. Hydrogen storage-compression system according to any preceding claim, further comprising a heating system (20) configured for heating each of the storage-compression containers mounted inside the casing.

3. Hydrogen storage-compression system according to the preceding claim, wherein the heating system comprises electric heating elements (21) mounted on or within the hydrogen storage-compression containers.

4. Hydrogen storage-compression system according to the preceding claim, wherein the electric heating elements (21) are mounted at one end of the hydrogen storage-compression containers, and a conductive jacket or layer (22) extends along and over the storage-compression containers from the heating elements towards the other end of the storage-compression containers.

5. Hydrogen storage-compression system according to claim 2, wherein the heating system comprises a heating fluid inlet (3b) to the casing configured for injection of a heated fluid, in particular steam, into the chamber of the casing.

6. Hydrogen storage-compression system according to any preceding claim, further comprising a cooling system (24) configured for cooling each of the storage-compression containers mounted inside the casing.

7. Hydrogen storage-compression system according to the preceding claim, wherein the cooling system comprises a cooling fluid inlet (3a) to the casing configured for injection of a cooling fluid, in particular air or water, into the chamber of the casing.

8. Hydrogen storage-compression system according to any preceding claim wherein each storage-compression container (6) comprises a tubular container wall (6a) and end caps (6b,6c) closing opposite ends of the tubular container wall, the tubular container wall of each storage-compression container having a diameter D in a range from 1.5cm to 10cm, preferably in a range from 2cm to 8cm, more preferably in a range from 3cm to 6cm and wherein adjacent ones of said plurality of storage-compression containers of said at least one multi-container unit (4) are separated by a gap (G) having a length in a range between 0.02xD to 1xD , preferably in a range from 0.1xD to 0.5xD.

9. Hydrogen storage-compression system according to the preceding claim wherein the storage-compression containers have a length in a range from 60cm to 200cm, preferably in range from 80cm to 150cm.

10. Hydrogen storage-compression system according to claim 8 or 9 wherein the gas flow tubes (5) comprise a T-shaped connection tube (8) comprising a cap tube section (8a) extending substantially in an axial direction corresponding to an axis of the tubular container wall, and a transverse tube section (8b) extending substantially orthogonally to the axial direction and welded to a first end of the cap tube section (8a), a second end of the end cap tube section (8a) being welded to an entry cap (6c) of the storage-compression container.

11. Hydrogen storage-compression system according to the preceding claim wherein ends of the transverse tube section (8b) are welded to ends of transverse tube sections of adjacent or opposing storage-compression containers.

12. Hydrogen storage-compression system according to any preceding claim wherein the plurality of storage-compression containers of said at least one multi-container unit are arranged in a row, the axes (A) of the containers being parallel to each other.

13. Hydrogen storage-compression system according to any preceding claim wherein each multi-container unit comprises a filter (9) positioned on an inner side of the entry cap covering an inlet/outlet (7) to prevent metal hydride particles from escaping the chamber through the inlet/outlet, in particular wherein the filter (9) comprises or consists of a sintered metal disc welded at its periphery to the entry cap.

14. Hydrogen storage system according to any preceding claim wherein a plurality of multi-container units (4) are arranged as a stack of multi-container units forming a storage-compression module (10) configured for containing hydrogen gas at a common pressure.

15. Hydrogen storage-compression system according to any preceding claim used :
- as a near-isobaric hydrogen supply system to absorb and desorb hydrogen at elevated pressure, preferably greater than 50 bar, more preferably greater than 200 bar, and desorb it at substantially constant pressure with a minimal change in temperature, preferably with a temperature change less than 40°C, more preferably with a temperature change ranging from 20°C to 30°C; or
- to compress hydrogen gas leak streams from a labyrinth sealing system to a suction pressure of an apparatus such as for instance a mechanical gas compressor or a cryogenic pump; or
- to feed hydrogen into a gas network or in pressurized hydrogen storage systems in a vibration-less, pulsation-less manner.

## Patentansprüche

1. Speicherkompressionssystem (1) für Wasserstoff, das ein Gehäuse (2), eine Vielzahl von Speicherkompressionsbehältern (6), die mindestens eine Mehrbehältereinheit (4) bilden, und ein Metallhydrid (MH) umfasst, das zur Wasserstoff-Speicherkompression ausgestaltet ist und innerhalb jedes der Speicherkompressionsbehälter enthalten ist, wobei die Vielzahl von Speicherkompressionsbehältern der mindestens einen Mehrbehältereinheit durch Gasströmungsrohre in einer direkten Fluidverbindung zusammengeschaltet sind, die sicherstellt, dass der Gasdruck innerhalb der Behälter im Wesentlichen gleich ist, wobei die Vielzahl von Speicherkompressionsbehältern im Inneren einer Kammer (16) des Gehäuses montiert sind, wobei das Gehäuse dazu ausgestaltet ist, ein Vakuum in der Kammer aufrechtzuerhalten, um Leckage der mindestens einen Mehrbehältereinheit zu testen, wobei das System ferner ein Vakuumsystem (18) umfasst, das eine Vakuumpumpe (19) umfasst, die mit dem Gehäuse verbunden ist.

2. Speicherkompressionssystem für Wasserstoff nach einem der vorhergehenden Ansprüche, das ferner ein Heizsystem (20) umfasst, das zum Heizen jedes der im Inneren des Gehäuses montierten Speicherkompressionsbehälter ausgestaltet ist.

3. Speicherkompressionssystem für Wasserstoff nach dem vorhergehenden Anspruch, wobei das Heizsystem elektrische Heizelemente (21) umfasst, die an den oder innerhalb der Wasserstoffspeicher-Kompressionsbehälter/n montiert sind.

4. Speicherkompressionssystem für Wasserstoff nach dem vorhergehenden Anspruch, wobei die elektrischen Heizelemente (21) an einem Ende der Wasserstoffspeicher-Kompressionsbehälter montiert sind und ein/e leitfähige/r Mantel oder Schicht (22) sich entlang und über den Speicherkompressionsbehältern von den Heizelementen hin zum anderen Ende der Speicherkompressionsbehälter erstreckt.

5. Speicherkompressionssystem für Wasserstoff nach Anspruch 2, wobei das Heizsystem einen Heizfluideinlass (3b) zum Gehäuse umfasst, der zum Einpressen eines erhitzten Fluids, insbesondere Dampf, in die Kammer des Gehäuses ausgestaltet ist.

6. Speicherkompressionssystem für Wasserstoff nach einem der vorhergehenden Ansprüche, das ferner ein Kühlsystem (24) umfasst, das zum Kühlen jedes der im Inneren des Gehäuses montierten Speicherkompressionsbehälter ausgestaltet ist.

7. Speicherkompressionssystem für Wasserstoff nach dem vorhergehenden Anspruch, wobei das Kühlsystem einen Kühlfluideinlass (3a) in das Gehäuse umfasst, der zum Einpressen eines Kühlfluids, insbesondere Luft oder Wasser, in die Kammer des Gehäuses ausgestaltet ist.

8. Speicherkompressionssystem für Wasserstoff nach einem der vorhergehenden Ansprüche, wobei jeder Speicherkompressionsbehälter (6) eine rohrförmige Behälterwand (6a) und Endkappen (6b, 6c) umfasst, die entgegengesetzte Enden der rohrförmigen Behälterwand schließen, wobei die rohrförmige Behälterwand jedes Speicherkompressionsbehälters einen Durchmesser D in einem Bereich von 1,5 cm bis 10 cm, vorzugsweise in einem Bereich von 2 cm bis 8 cm, mehr bevorzugt in einem Bereich von 3 cm bis 6 cm, aufweist und wobei benachbarte der Vielzahl von Speicherkompressionsbehältern der mindestens einen Mehrbehältereinheit (4) durch einen Spalt (G) getrennt sind, der eine Länge in einem Bereich von zwischen 0,02 x D bis 1 x D, vorzugsweise in einem Bereich von 0,1 x D bis 0,5 x D, aufweist.

9. Speicherkompressionssystem für Wasserstoff nach dem vorhergehenden Anspruch, wobei die Speicherkompressionsbehälter eine Länge in einem Bereich von 60 cm bis 200 cm, vorzugsweise in einem Bereich von 80 cm bis 150 cm, aufweisen.

10. Speicherkompressionssystem für Wasserstoff nach Anspruch 8 oder 9, wobei die Gasströmungsrohre (5) ein T-förmiges Verbindungsrohr (8), das einen Kappenrohrabschnitt (8a) umfasst, der sich im Wesentlichen in einer axialen Richtung erstreckt, die einer Achse der rohrförmigen Behälterwand entspricht, und einen Querrohrabschnitt (8b) umfassen, der sich im Wesentlichen orthogonal zur axialen Richtung erstreckt und an ein erstes Ende des Kappenrohrabschnitts (8a) geschweißt ist, wobei ein zweites Ende des Kappenrohrabschnitts (8a) an eine Eingangskappe (6c) des Speicherkompressionsbehälters geschweißt ist.

11. Speicherkompressionssystem für Wasserstoff nach dem vorhergehenden Anspruch, wobei Enden des Querrohrabschnitts (8b) an Enden von Querrohrabschnitten von benachbarten oder entgegengesetzten Speicherkompressionsbehältern geschweißt sind.

12. Speicherkompressionssystem für Wasserstoff nach einem der vorhergehenden Ansprüche, wobei die Vielzahl von Speicherkompressionsbehältern der mindestens einen Mehrbehältereinheit in einer Reihe angeordnet sind, wobei die Achsen (A) der Behälter parallel zueinander sind.

13. Speicherkompressionssystem für Wasserstoff nach einem der vorhergehenden Ansprüche, wobei jede Mehrbehältereinheit ein Filter (9) umfasst, das an einer Innenseite der Eintrittskappe positioniert ist, die einen Einlass/Auslass (7) bedeckt, um zu verhindern, dass Metallhydridpartikel durch den Einlass/Auslass aus der Kammer austreten, wobei das Filter (9) insbesondere eine gesinterte Metallscheibe umfasst oder daraus besteht, die an ihrem Umfang an die Eintrittskappe geschweißt ist.

14. Speicherkompressionssystem für Wasserstoff nach einem der vorhergehenden Ansprüche, wobei eine Vielzahl von Mehrbehältereinheiten (4) als ein Stapel von Mehrbehältereinheiten angeordnet sind, die ein Speicherkompressionsmodul (10) bilden, das zum Enthalten von Wasserstoffgas bei einem gemeinsamen Druck ausgestaltet ist.

15. Speicherkompressionssystem für Wasserstoff nach einem der vorhergehenden Ansprüche, das verwendet wird:
- als ein nahezu isobares Wasserstoffzufuhrsystem zum Absorbieren und Desorbieren von Wasserstoff bei erhöhtem Druck, vorzugsweise höher als 50 bar, mehr bevorzugt höher als 200 bar, und zu dessen Desorbieren bei im Wesentlichen konstantem Druck mit einer minimalen Temperaturänderung, vorzugsweise mit einer Temperaturänderung von weniger als 40 °C, mehr bevorzugt mit einer Temperaturänderung im Bereich von 20 °C bis 30 °C; oder
- zum Verdichten von Wasserstoffgas-Leckströmen von einem Labyrinthdichtungssystem auf einen Saugdruck einer Vorrichtung wie beispielsweise einem mechanischen Gaskompressor oder einer Kryopumpe; oder
- zum Zuführen von Wasserstoff in ein Gasnetz oder in druckbeaufschlagte Wasserstoffspeichersysteme auf eine schwingungsfreie, pulsationsfreie Weise.

## Revendications

1. Système de stockage-compression d'hydrogène (1) comprenant une enceinte (2), une pluralité de conteneurs de stockage-compression (6) formant au moins une unité à conteneurs multiples (4), et un hydrure métallique (MH) configuré pour le stockage-compression d'hydrogène contenu à l'intérieur de chacun des conteneurs de stockage-compression, la pluralité de conteneurs de stockage-compression de ladite au moins une unité à conteneurs multiples étant interconnectée par des tubes d'écoulement de gaz en connexion fluidique directe assurant que la pression de gaz à l'intérieur des conteneurs soit pratiquement identique, dans lequel ladite pluralité de conteneurs de stockage-compression est montée à l'intérieur d'une chambre (16) de l'enceinte, l'enceinte étant configurée pour maintenir un vide dans ladite chambre pour tester des fuites de ladite au moins une unité à conteneurs multiples, le système comprenant en outre un système de vide (18) comprenant une pompe à vide (19) connectée à l'enceinte.

2. Système de stockage-compression d'hydrogène selon l'une quelconque des revendications précédentes, comprenant en outre un système chauffant (20) configuré pour chauffer chacun des conteneurs de stockage-compression montés à l'intérieur de l'enceinte.

3. Système de stockage-compression d'hydrogène selon la revendication précédente, dans lequel le système chauffant comprend des éléments chauffants électriques (21) montés sur ou dans les conteneurs de stockage-compression d'hydrogène.

4. Système de stockage-compression d'hydrogène selon la revendication précédente, dans lequel les éléments chauffants électriques (21) sont montés à une extrémité des conteneurs de stockage-compression d'hydrogène, et une chemise ou couche conductrice (22) s'étend le long et au-dessus des conteneurs de stockage-compression depuis les éléments chauffants en direction de l'autre extrémité des conteneurs de stockage-compression.

5. Système de stockage-compression d'hydrogène selon la revendication 2, dans lequel le système chauffant comprend une entrée de fluide de chauffage (3b) vers l'enceinte, configurée pour l'injection d'un fluide chauffé, en particulier de vapeur, dans la chambre de l'enceinte.

6. Système de stockage-compression d'hydrogène selon l'une quelconque des revendications précédentes, comprenant en outre un système refroidisseur (24) configuré pour refroidir chacun des conteneurs de stockage-compression montés à l'intérieur de l'enceinte.

7. Système de stockage-compression d'hydrogène selon la revendication précédente, dans lequel le système refroidisseur comprend une entrée de fluide de refroidissement (3a) vers l'enceinte, configurée pour l'injection d'un fluide de refroidissement, en particulier d'air ou d'eau, dans la chambre de l'enceinte.

8. Système de stockage-compression d'hydrogène selon l'une quelconque des revendications précédentes, dans lequel chaque conteneur de stockage-compression (6) comprend une paroi de conteneur tubulaire (6a) et des capots d'extrémité (6b, 6c) fermant des côtés opposés de la paroi de conteneur tubulaire, la paroi de conteneur tubulaire de chaque conteneur de stockage-compression ayant un diamètre D situé dans la plage allant de 1,5 cm à 10 cm, de préférence dans la plage allant de 2 cm à 8 cm, mieux encore dans la plage allant de 3 cm à 6 cm, et dans lequel des conteneurs adjacents parmi ladite pluralité de conteneurs de stockage-compression de ladite au moins une unité à conteneurs multiples (4) sont séparés par un espace (G) ayant une longueur située dans la plage comprise entre 0,02x*D* et 1xD, de préférence dans la plage allant de 0,1xD à 0,5xD.

9. Système de stockage-compression d'hydrogène selon la revendication précédente, dans lequel les conteneurs de stockage-compression ont une longueur située dans la plage allant de 60 cm à 200 cm, de préférence dans la plage allant de 80 cm à 150 cm.

10. Système de stockage-compression d'hydrogène selon la revendication 8 ou 9, dans lequel les tubes d'écoulement de gaz (5) comprennent un tube de connexion en forme de T (8) comprenant une section de tube de capot (8a) s'étendant sensiblement dans une direction axiale correspondant à un axe de la paroi de conteneur tubulaire, et une section de tube transversale (8b) s'étendant sensiblement orthogonalement à la direction axiale et soudée à une première extrémité de la section de tube de capot (8a), une deuxième extrémité de la section de tube de capot d'extrémité (8a) étant soudée à un capot d'entrée (6c) du conteneur de stockage-compression.

11. Système de stockage-compression d'hydrogène selon la revendication précédente, dans lequel des extrémités de la section de tube transversale (8b) sont soudées à des extrémités de sections de tube transversales de conteneurs de stockage-compression adjacents ou opposés.

12. Système de stockage-compression d'hydrogène selon l'une quelconque des revendications précédentes, dans lequel la pluralité de conteneurs de stockage-compression de ladite au moins une unité à conteneurs multiples est disposée en rangée, les axes (A) des conteneurs étant mutuellement parallèles.

13. Système de stockage-compression d'hydrogène selon l'une quelconque des revendications précédentes, dans lequel chaque unité à conteneurs multiples comprend un filtre (9) positionné sur un côté intérieur du capot d'entrée couvrant une entrée/sortie (7) pour empêcher des particules d'hydrure métallique de s'échapper de la chambre par l'entrée/sortie, en particulier dans lequel le filtre (9) comprend ou consiste en un disque métallique fritté soudé à sa périphérie au capot d'entrée.

14. Système de stockage-compression d'hydrogène selon l'une quelconque des revendications précédentes, dans lequel une pluralité d'unités à conteneurs multiples (4) est disposée sous la forme d'un empilement d'unités à conteneurs multiples formant un module de stockage-compression (10) configuré pour contenir de l'hydrogène gazeux sous une pression commune.

15. Système de stockage-compression d'hydrogène selon l'une quelconque des revendications précédentes, utilisé :
- en tant que système de fourniture d'hydrogène sous une pression proche de la pression isobarique pour absorber et désorber de l'hydrogène sous une pression élevée, de préférence supérieure à 50 bar, mieux encore supérieure à 200 bar, et le désorber sous une pression pratiquement constante avec un changement minimal de température, de préférence avec un changement de température inférieur à 40°C, mieux encore avec un changement de température situé dans la plage allant de 20°C à 30°C ; ou
- pour comprimer des courants de fuite d'hydrogène gazeux provenant d'un système d'étanchéité en labyrinthe jusqu'à une pression d'aspiration d'un appareil tel que par exemple un compresseur à gaz mécanique ou une pompe cryogénique ; ou
- pour introduire de l'hydrogène dans un réseau gazeux ou dans des systèmes de stockage d'hydrogène sous pression d'une manière non vibrante et non pulsée.
